(19) **Europäisches Patentamt**
**European Patent Office**
**Office européen des brevets**

(11) **EP 1 603 708 B1**

(12) **FASCICULE DE BREVET EUROPEEN**

(45) Date de publication et mention
de la délivrance du brevet:
**21.09.2011 Bulletin 2011/38**

(21) Numéro de dépôt: **03816346.5**

(22) Date de dépôt: **30.12.2003**

(51) Int Cl.:
***B24B 9/14*** *(2006.01)*      ***G05B 19/401*** *(2006.01)*
***B24B 47/22*** *(2006.01)*

(86) Numéro de dépôt international:
**PCT/FR2003/003945**

(87) Numéro de publication internationale:
**WO 2004/082889 (30.09.2004 Gazette 2004/40)**

(54) **PROCEDE D'ESTIMATION DE DECALAGE ANGULAIRE, PROCEDE DE TALONNAGE D'UNE MEULEUSE DE VERRES OPHTALMIQUES, ET DISPOSITIF POUR LA MISE EN OEUVRE D'UN TEL PROCEDE D'ETALONNAGE**

VERFAHREN ZUR EINSCHÄTZUNG DER WINKELVERSCHIEBUNG, VERFAHREN ZUR KALIBRIERUNG EINER SCHLEIFMASCHINE FÜR BRILLENGLÄSER UND VORRICHTUNG ZUR DURCHFÜHRUNG DES GENANNTEN KALIBRIERUNGSVERFAHRENS

METHOD FOR ESTIMATING THE ANGULAR OFFSET, METHOD FOR CALIBRATING A GRINDING MACHINE FOR OPHTHALMIC GLASSES AND DEVICE FOR CARRYING OUT SAID CALIBRATING METHOD

(84) Etats contractants désignés:
**DE ES FR**

(30) Priorité: **14.03.2003 FR 0303191**

(43) Date de publication de la demande:
**14.12.2005 Bulletin 2005/50**

(73) Titulaire: **BRIOT INTERNATIONAL**
**27340 Pont de l'Arche (FR)**

(72) Inventeur: **VIDECOQ, Jean-Jacques**
**F-76570 Pavilly (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**FR-A- 2 771 665      US-B1- 6 332 827**

**Description**

La présente invention concerne un procédé d'estimation, pour une meuleuse de verres ophtalmiques, du décalage angulaire entre un axe radial tournant lié à un verre à meuler et un axe radial tournant de référence.

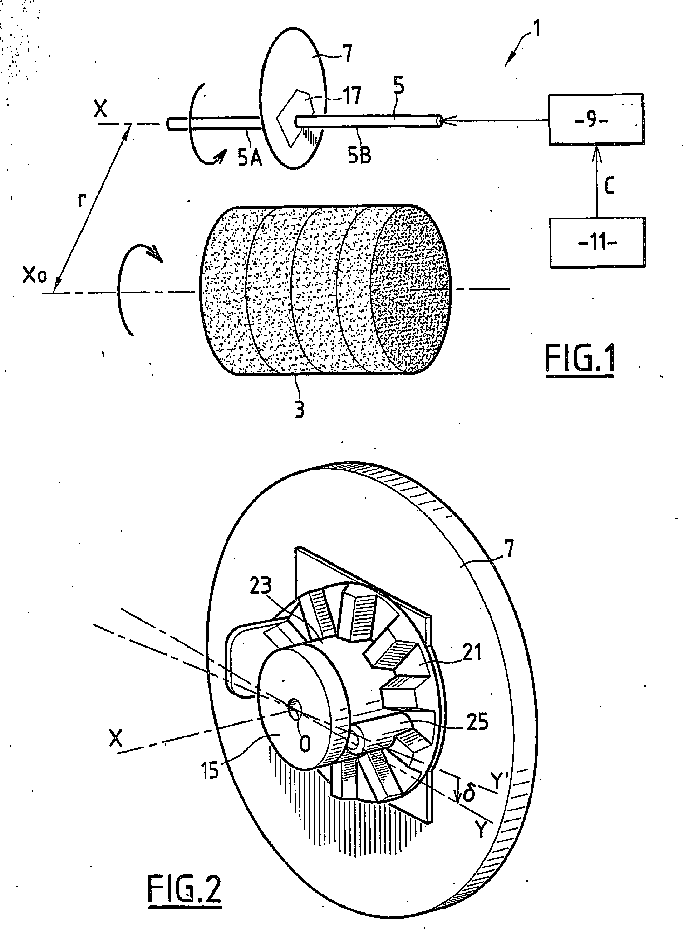

Sur la figure 1, on a représenté schématiquement une meuleuse 1 de verres ophtalmiques, de type connu, qui comprend essentiellement un train de meules 3, un arbre-support 5 sur lequel est monté un verre à meuler 7, des moyens 9 d'entraînement de l'arbre 5, et une unité 11 de commande des moyens d'entraînement 9.

Les meules 3 sont montées rotatives sur un bâti (non représenté) de la meuleuse 1, autour d'un axe de meule $X_0$ généralement fixe par rapport au bâti. Lors d'une opération de meulage, les meules 3 sont entraînées en rotation par des moyens moteurs non représentés sur la figure.

L'arbre 5 est généralement composé de deux demi-arbres 5A, 5B coaxiaux, entre lesquels est serré le verre ophtalmique 7. De façon classique, un adaptateur de meulage 15 (figure 2) est fixé, par exemple par collage, sur l'une des faces du verre 7, et emboîté sur l'un 5A des demi-arbres. A cet effet, le demi-arbre 5A présente à son extrémité tournée vers l'autre demi-arbre 5B une forme d'entraînement complémentaire de l'adaptateur 15 (figure 2). Ainsi, le verre 7 est rendu solidaire de l'arbre 5 en vue de l'opération de meulage.

L'arbre 5 est monté rotatif sur un chariot (non représenté) mobile par rapport au bâti de la meuleuse 1. L'axe X de l'arbre 5, qui constitue son axe de rotation, s'étend parallèlement à l'axe $X_0$ de meule.

Les moyens d'entraînement 9 sont prévus pour d'une part entraîner l'arbre 5 en rotation autour de son axe X, et d'autre part entraîner le chariot de façon à déplacer l'axe *XX par rapport à l'axe de meule $X_0$, suivant une consigne C délivrée par l'unité de commande 11.

Pour simplifier la description qui va suivre, les moyens d'entraînement 9, adaptés pour entraîner en rotation l'arbre 5 et pour déplacer cet arbre 5 par rapport à la meule 3, seront assimilés à un moteur unique. Dans la pratique, ce moteur 9 pourrait être remplacé par deux moteurs distincts, commandés de façon liée par l'unité de commande 11, l'un assurant l'entraînement en rotation de l'arbre 5, et l'autre assurant le déplacement du chariot par rapport à la meule 3.

Pour réaliser une opération de meulage d'une ébauche de verre 7 devant conduire à l'obtention d'une forme de verre fini 17 (représentée en pointillés sur la figure 1), l'unité de commande 11 est programmée de façon à piloter les moyens d'entraînement 9 suivant une loi de commande associée à la forme 17. Cette loi de commande lie un paramètre de distance entre l'axe X et la meule, à un' paramètre de position angulaire du verre autour de son axe X. Elle peut être exprimée sous la forme :

$$r = f(\theta)$$

où r est la distance d'entraxe entre les axes X et $X_0$, et $\theta$ est supposée représenter la position angulaire du verre autour de l'axe X par rapport à une position neutre définie par un axe radial fixe par rapport au chariot, c'est-à-dire par rapport à l'axe X.

Sur la figure 2, on a représenté l'ébauche de verre 7 munie de l'adaptateur 15, l'ébauche et l'adaptateur formant conjointement un ensemble solidaire prêt à être monté sur le demi-arbre 5A par emboîtement.

L'adaptateur 15 présente une base 21 sous la forme d'une collerette collée sur l'ébauche de verre 7, et un plot 23 sensiblement cylindrique en saillie de ladite base 21. L'adaptateur 15 comprend également un détrompeur 25 en saillie radiale du plot, permettant de monter l'ébauche de verre 7 sur l'arbre 5 selon une orientation prédéterminée, définie par l'axe radial Y passant par le centre de rotation O. Lorsque l'adaptateur 15 est monté sur l'arbre 5, l'axe X de l'arbre 5 passe par le centre O de l'adaptateur 15, et définit avec l'axe radial Y un repère tournant lié au verre à meuler 7. Dans ce qui suit, l'axe Y sera appelé axe radial tournant lié au verre à meuler ».

Cet axe radial tournant Y coïncide, lorsque le verre 7 est monté sur l'arbre 5, avec un axe radial tournant correspondant de la forme d'entraînement du demi-arbre 5A.

Comme on l'a vu précédemment, le pilotage des moyens d'entraînement 9 par l'unité de commande 11 nécessite la connaissance, à chaque instant, de la position angulaire de l'axe Y par rapport à l'axe radial fixe en rotation autour de l'axe X.

L'angle $\theta$ intervenant dans la loi de commande du type précité représente en réalité la position angulaire d'un axe radial tournant de référence Y', connu par construction de la machine, vis-à-vis de cet axe radial fixe.

La meuleuse 1 est en théorie prévue pour que l'axe radial de référence Y' coïncide avec l'axe radial lié à la forme d'entraînement du demi-arbre 5A, c'est-à-dire avec l'axe radial Y lié au verre.

En pratique, cependant, la précision du calage de l'axe Y' sur l'axe Y est de l'ordre du degré, alors que la précision requise sur l'angle $\theta$, pour obtenir des verres finis de qualité satisfaisante est de l'ordre du dixième de degrés.

pour les machines de meulage courantes, il est dont nécessaire, préalablement à la première utilisation de la machine, d'estimer le décalage angulaire $\delta$ de l'axe radial lié au verre Y par rapport à l'axe radial de référence Y' , et d'étalonner la machine de façon à introduire, dans l'unité de commande 11, une correction de loi de commande. Cette correction se traduit par un changement de variable de position angulaire, de $\theta$ à $\theta + \delta$, de sorte que la commande de pilotage après étalonnage s'exprime par : $r = f(\theta + \delta)$.

On connaît dans l'état de la technique un procédé permettant d'estimer le décalage angulaire δ, et ainsi d'étalonner la meuleuse. Un tel procédé est décrit par exemple dans le document FR-A-2 771 665.

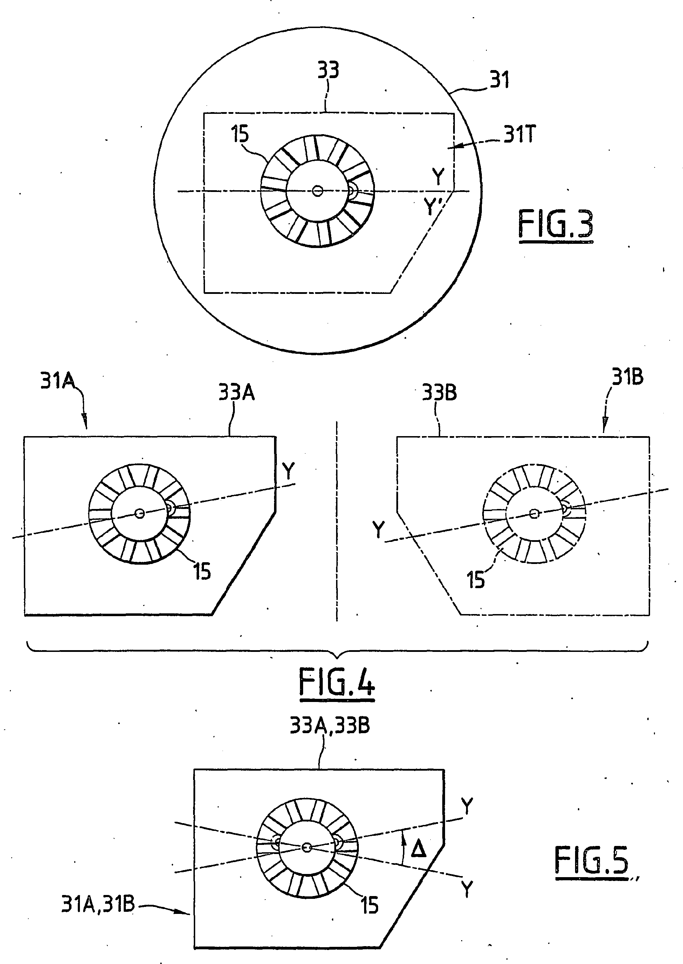

On va maintenant décrire un tel procédé en référence aux figures 3 à 5, qui illustrent, dans des vues en plan, des verres-étalons munis de leur adaptateur.

L'opérateur place une première ébauche de verre 31, préalablement munie d'un adaptateur 15 et préalablement marquée (par impression à l'encre ou gravage) de l'axe radial Y définissant l'orientation de l'adaptateur, dans la meuleuse 1.

Ce marquage définit une trace d'un axe radial lié au verre. En l'occurrence, cet axe lié au verre est confondu avec l'axe de l'adaptateur, mais l'adaptateur pourrait être placé sur le verre avec un décalage non nul, connu, par rapport à l'axe marqué sur le verre. Il serait alors tenu compte de ce décalage supplémentaire connu dans la correction de loi de commande.

L'opérateur fait ensuite fonctionner la meuleuse 1 suivant une loi de commande particulière, programmée dans l'unité de commande 11, et conduisant théoriquement, c'est-à-dire en l'absence de décalage angulaire δ, à la forme finie théorique 31T représentée en traits mixtes sur la figure 3.

La forme de verre 31T ainsi obtenue présente, dans l'exemple représenté, un bord 33 rectiligne, parallèle à l'axe Y. Ce bord rectiligne 33 définit une partie de référence du contour, dont l'inclinaison théorique est nulle.

Il va de soi que la forme théorique 31T pourrait être d'un autre type, la condition nécessaire étant qu'une partie de référence du contour, rectiligne ou non, soit identifiée et d'inclinaison connue. Si la partie de référence n'est pas rectiligne, on définit son inclinaison comme l'inclinaison de sa tangente en un point de référence, notamment un point médian de la partie de référence. Il est évident qu'un bord rectiligne offre une plus grande simplicité de mesure d'inclinaison. C'est la raison pour laquelle l'invention est décrite avec un verre-étalon dont la forme théorique comprend un bord rectiligne. Par choix de simplicité, l'inclinaison théorique du bord rectiligne de référence est, de plus, choisie nulle. Dans ce cas, en l'absente de décalage δ, les axes Y et Y' sont confondus.

Avec l'existence d'un décalage δ, l'opérateur obtient en réalité un premier verre-étalon fini 31A, représenté sur la figure 4.

L'opérateur renouvelle ensuite l'opération avec un deuxième verre 31, après reprogrammation de l'unité de commande 11 avec une loi de commande conduisant à l'obtention d'un deuxième verre fini symétrique du premier. Théoriquement encore, en l'absence de décalage angulaire δ, la forme du deuxième verre présenterait un bord rectiligne 33 parallèle à l'axe Y.

L'existence du décalage angulaire δ entre l'axe radial lié au verre Y et l'axe radial de référence Y' de la machine conduit à un défaut de parallélisme entre chacun des bords rectilignes 33A, 33B et leur axe radial Y respectif.

Comme illustré sur la figure 5, l'opérateur superpose ensuite les deux verres finis 31A, 31B. Il apparaît alors entre les deux axes radiaux Y un.angle de décalage Δ égal à deux fois l'angle de décalage δ :

$$\Delta = 2 \times \delta.$$

Pour mesurer l'angle Δ et ainsi accéder au décalage angulaire δ, l'opérateur peut par exemple placer les deux verres 31A, 31B superposés sur une table graduée, et ainsi visualiser l'angle formé par les deux axes marqués Y.

Un tel procédé présente un certain nombre d'inconvénients, notamment l'obligation pour l'opérateur de meuler deux verres d'étalonnage au cours de deux opérations successives, ce qui induit une perte de temps et de matériel ophtalmique. En outre, la phase de mesure après le meulage des deux verres symétriques est une opération manuelle nécessitant une certaine dextérité de l'opérateur et n'aboutissant pas toujours à une précision de mesure suffisante.

L'invention a pour objet de proposer un procédé d'estimation de décalage angulaire pour une meuleuse de verres optiques du type précédemment décrit, permettant d'obtenir une précision accrue, et mettant en oeuvre un nombre réduit d'opérations de meulage et des manipulations simples.

Ce but est atteint par un procédé d'estimation selon la revendication 1.

D'autres caractéristiques du procédé sont décrites dans les sous-revendications 2 à 5.

L'invention vise également un procédé d'étalonnage d'une meuleuse des verres ophtalmiques du type précité selon la revendication 6.

De préférence, ladite correction consiste à augmenter, dans la loi de commande, la variable de position angulaire de la valeur algébrique du décalage angulaire estimé.

L'invention vise enfin un dispositif pour la mise en oeuvre d'un procédé d'étalonnage selon la revendication 8.

D'autres caractéristiques du dispositif selon l'invention sont décrites dans les sous-revendications 9 à 13.

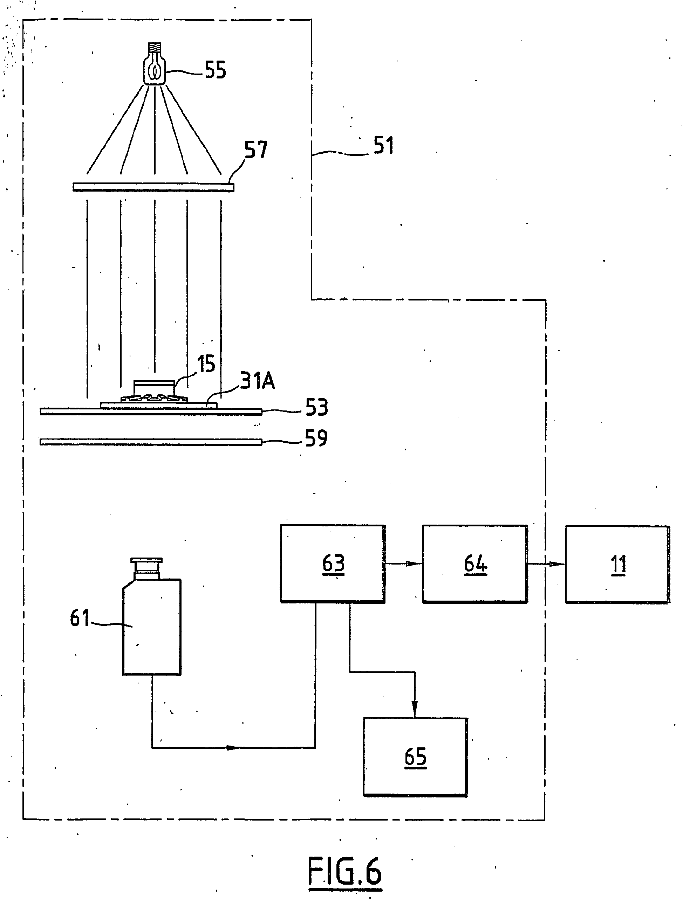

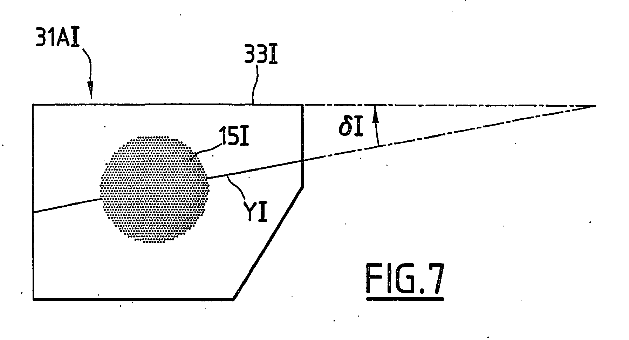

Un mode particulier de réalisation de l'invention va maintenant être décrit plus en détail en référence aux figures 6 et 7 des dessins annexés, parmi lesquelles :

- la figure 6 est une vue schématique d'un dispositif conforme à l'invention ; et
- la figure 7 est une vue en plan d'un verre-étalon tel qu'il peut être observé par le dispositif de prise d'images du dispositif selon l'invention.

Selon le procédé d'estimation du décalage angulaire δ conforme à l'invention, on meule un verre étalon du type décrit en référence à la figure 4 à partir d'une ébauche marquée 31, telle que décrite en référence à la figure 3.

Le décalage δ est ensuite estimé par le dispositif 51 représenté sur la figure 6.

Ce dispositif 51 comprend un support plan transparent 53 sur lequel peut être placé le verre étalon 31A muni de son adaptateur 15.

Il comprend en outre une source de lumière 55, un collimateur 57, et un verre dépoli 59, disposés de façon que les rayons lumineux issus de la source 55 traversent le collimateur 57 pour être rendus parallèles et éclairer orthogonalement le verre 31A placé sur le support 53. Cette disposition permet de réaliser une projection du verre 31A et de son adaptateur 15 sur le verre dépoli 59.

Le dispositif comprend de plus un dispositif de prise d'images sous la forme d'une caméra vidéo 61, des moyens d'analyse d'images 63 reliés à la caméra 61, et éventuellement un écran de visualisation 65 relié aux moyens d'analyse d'images 63. L'écran 65 pourrait être également relié directement à la caméra 61.

Le verre dépoli 59, formant écran de projection de l'ombre de l'objet placé sur le support 53, est placé dans le champ de la caméra 61, de sorte que la caméra 61 observe cette ombre projetée et transmette son image aux moyens d'analyse d'images 63.

Le dispositif comprend en outre des moyens de programmation 64 reliés d'une part aux moyens d'analyse d'images 63, et d'autre part à l'unité de commande 11 de la meuleuse.

Sur la figure 7, on a représenté l'image 31AI du verre-étalon 31A ainsi observée par la caméra 61, et visible sur l'écran 65.

Sur cette image 31AI apparaissent distinctement l'ombre massive de l'adaptateur 15I, l'ombre du marquage d'axe YI, et l'ombre du bord rectiligne 33I.

Les moyens d'analyse d'images 63 sont adaptés pour :

- détecter l'image du bord rectiligne 33I et l'image de l'axe d'adaptateur YI, et
- mesurer le .décalage angulaire δI , suppose égal au décalage réel δ, entre l'image du bord rectiligne 33I et l'axe de l'adaptateur YI.

La valeur estimée du décalage δ est transmise aux moyens de programmation 64.

C'est ainsi que le dispositif 51 permet de réaliser une estimation précise de l'angle de décalage δ après le meulage d'un seul verre-étalon, et grâce à ses moyens de programmation 64, de programmer automatiquement les moyens de commande 11 de la meuleuse de verres ophtalmiques de façon à introduire une correction des lois de commande, dépendante de la valeur estimée de décalage angulaire δ.

Il faut noter que la trace matérialisant l'axe lié au verre Y, c'est-à-dire le marquage d'axe dans l'exemple représenté, pourrait être constituée de la forme de l'adaptateur elle-même, les moyens d'analyse d'images devant alors « recréer » virtuellement l'axe de l'adaptateur Y à partir de l'image de l'adaptateur, orientée grâce à l'image du détrompeur.

## Revendications

1. Procédé d'estimation, pour une meuleuse (1) de verres ophtalmiques, du décalage angulaire (δ) entre un axe radial tournant (Y) lié à un verre à meuler et un axe radial tournant de référence (Y'), ladite meuleuse (1) comprenant :

   - une meule (3) ;
   - un arbre-support (5) rotatif autour de son axe (X) et mobile par rapport à la meule (3), sur lequel peut être monté, solidaire en rotation, un verre ophtalmique (7) par l'intermédiaire d'un adaptateur de meulage (15),
   - des moyens d'entraînement, (9) adaptés pour entraîner en rotation l'arbre-support (5) autour de son axe (X), et pour déplacer l'arbre-support (5) par rapport à la meule(3) ; et
   - des moyens de commande (11) aptes à piloter les moyens d'entraînement (9) selon une loi de commande préprogrammée liant la position relative (r) de l'arbre-support (5) et de la meule (3) à la position angulaire (θ) de l'axe radial tournant de référence (Y') dans un repère fixe lié à l'axe (X) de l'arbre-support (5) ; **caractérisé en ce que** le procédé comprend les étapes successives consistant à :

   - meuler un verre-étalon (31A) sur lequel on a préalablement matérialisé l'axe radial (Y) lié au verre par une trace, selon une loi de commande correspondant à une forme de verre-étalon fini théorique, dont on connaît l·inclinaison théorique d'une partie de référence (33A) du contour par rapport audit axe radial de référence (Y') ;
   - réaliser une image (31AI, YI) du verre-étalon fini et de ladite trace ;
   - analyser ladite image (31AI, YI) par des moyens d'analyse d'images, de façon à mesurer l'inclinaison réelle (δI) de l'image (33AI) de la partie de référence (33A) par rapport à l'image (YI) de la trace ; et
   - déduire ledit décalage angulaire (δ) qui est égal à l'écart entre l'inclinaison réelle mesurée (δI) et l'inclinaison théorique.

2. Procédé selon la revendication 1, **caractérisé en ce qu'**on choisit le verre-étalon (31A) de façon que son contour présente au moins un bord rectiligne (33A), ce dernier constituant la partie de référence du contour.

**3.** Procédé selon la revendication 2, **caractérisé en ce qu'**on choisit le verre-étalon (31A) de façon que ledit bord rectiligne (33A) de sa forme finie théorique soit parallèle à l'axe radial de référence (Y'), c'est-à-dire d'inclinaison théorique nulle.

**4.** Procédé suivant l'une quelconque des revendications 1 à 3, **caractérisé en ce que** la trace est constituée par un marquage porté sur le verre (7), coïncidant avec l'axe radial (Y) de l'adaptateur de meulage (15).

**5.** Procédé suivant l'une quelconque des revendications 1 à 4, **caractérisé en ce qu'**on réalise une image du verre-étalon (31A) et de la trace (Y) de la façon suivant :

- on projette une ombre du verre-étalon (31A) et de la trace (Y) sur un écran (59) ; et
- on observe cette ombre au moyen d'une caméra vidéo (61).

**6.** Procédé d'étalonnage d'une meuleuse de verres ophtalmiques, du type comprenant :

- une meule (3);
- un arbre-support (5) rotatif autour de son axe (X) et mobile par rapport à la meule (3), sur lequel peut être monté, solidaire en rotation, un verre ophtalmique (7) par l'intermédiaire d'un adaptateur de meulage (15),
- des moyens d'entraînement (9) adaptés pour entraîner en rotation l'arbre- support (5) autour de son axe (X), et pour déplacer l'arbre-support (5) par rapport à la meule (3) ; et
- des moyens de commande (11) aptes à piloter les moyens d'entraînement (9) selon une loi de commande préprogrammée liant la position relative (r) de l'arbre- support (5) et de la meule (3) à la position angulaire (θ) d'un axe radial tournant de référence (Y') dans un repère fixe lié à l'axe (X) de l'arbre- support (5) ; **caractérisé en ce que**

l'on estime le décalage angulaire (δ) entre un axe radial tournant (Y) lié à un verre à meuler (7) et l'axe radial tournant de référence (Y'), par un procédé conforme à l'une quelconque des revendications 1 à 5, et dans lequel on programme les moyens dé commande (11) de façon à introduire une correction des lois de commande qui dépend dudit décalage angulaire (δ) estimé.

**7.** Procédé d'étalonnage suivant la revendication 6, **caractérisé en ce que** ladite correction consiste à augmenter, dans la loi de commande, la variable de position angulaire (θ) de la valeur algébrique (δ) du décalage angulaire estimé.

**8.** Dispositif pour la mise en oeuvre d'un procédé conforme à la revendication 6 ou 7, comprenant :

- un dispositif de prise d'images (61) ;
- des moyens d'analyse d'images (63) reliés audit dispositif de prise d'images (61), adaptés pour mesurer l'inclinaison réelle (δI) de l'image (33AI) d'une partie de référence (33A) du contour d'un objet ophtalmique (31A) par rapport à l'image (YI) d'une trace figurant sur ledit objet ophtalmique (31A) ;
- des moyens de programmation (64) reliés d'une part aux moyens d'analyse d'images (63), et d'autre part aux moyens de commande (11) d'une meuleuse (1) de verres ophtalmiques, **caractérisé en ce que** lesdites moyens de programmation (64) sont adaptés pour recevoir une information de décalage angulaire (δ) de la part des moyens d'analyse d'images (63), et pour programmer en réponse les moyens de commande (11) de la meuleuse, de façon à introduire une correction des lois de commande en fonction de ladite information de décalage angulaire (δ).

**9.** Dispositif suivant la revendication 8, **caractérisé en ce qu'**il comprend en outre un écran (59), et des moyens (55) d'éclairage d'un objet ophtalmique permettant de projeter une ombre de l'objet sur l'écran (59), ledit écran (59) étant placé dans le champ d'observation dudit dispositif de prise d'images (61).

**10.** Dispositif suivant la revendication 9, **caractérisé en ce qu'**il comprend un support transparent (53) pour recevoir l'objet ophtalmique, disposé entre les moyens d'éclairage (55) et l'écran (59).

**11.** Dispositif suivant la revendication 10, **caractérisé en ce qu'**il comprend un collimateur (57) disposé entre les moyens d'éclairage (55) et le support transparent (53) pour rendre les rayons lumineux issus des moyens d'éclairage (55) sensiblement parallèles entre eux et normaux par rapport au support (53).

**12.** Dispositif suivant l'une quelconque des revendications 9 à 11, **caractérisé en ce que** l'écran (59) est un dépoli.

**13.** Dispositif suivant l'une quelconque des revendications 8 à 12, **caractérisé en ce que** le dispositif de prise d'images (61) est une caméra vidéo.

**Claims**

**1.** A method for estimating, for an ophthalmic lens grinding machine (1), the angular offset (δ) between a rotating radial axis (Y) associated with a lens that is to be ground and a reference rotating radial axis (Y'), said grinding machine (1) comprising:

- a grinding wheel (3);
- a support shaft (5) that can rotate about its axis (X) and can move with respect to the grinding wheel (3), on which support shaft an ophthalmic lens (7) can be mounted via a grinding adapter (15), such that the lens rotates as one with the shaft,
- drive means (9) designed to rotationally drive the support shaft (5) about its axis (X) and to move the support shaft (5) with respect to the grinding wheel (3); and
- control means (11) able to control the drive means (9) according to a preprogrammed control law connecting the relative position (r) of the support shaft (5) and of the grinding wheel (3) to the angular position (θ) of the reference rotating radial axis (Y') in a fixed frame of reference connected with the axis (X) of the support shaft (5); **characterized in that** the method comprises the following steps consisting in:
- grinding a reference standard lens (31A) on which the radial axis (Y) associated with the lens has already been embodied in the form of a line, according to a control law corresponding to a theoretical finished shape of reference standard lens, of which the theoretical inclination of a reference part (33A) of the contour with respect to said reference radial axis (Y') is known;
- producing an image (31AI, YI) of the finished reference standard lens and of said line;
- analyzing said image (31AI, YI) using image-analysis means, so as to measure the actual inclination (δI) of the image (33AI) of the reference part (33A) with respect to the image (YI) of the line; and
- deducing said angular offset (δ) which is equal to the discrepancy between the measured actual inclination (δI) and the theoretical inclination.

**2.** The method as claimed in claim 1, **characterized in that** the reference standard lens (31A) is chosen so that its contour has at least one straight edge (33A), the latter constituting the reference part of the contour.

**3.** The method as claimed in claim 2, **characterized in that** the reference standard lens (31A) is chosen so that said straight edge (33A) of its theoretical finished shape is parallel to the reference radial axis (Y'), that is to say has zero theoretical inclination.

**4.** The method as claimed in any one of claims 1 to 3, **characterized in that** the line consists of a mark carried onto the lens (7) to coincide with the radial axis (Y) of the grinding adapter (15).

**5.** The method as claimed in any one of claims 1 to 4, **characterized in that** an image of the reference standard lens (33A) and of the line (Y) is produced in the following way:

- a shadow of the reference standard lens (31A) and of the line (Y) is projected onto a screen (59); and
- this shadow is observed using a video camera. (61),

**6.** A method of calibrating an ophthalmic lens grinding machine, of the type comprising:

- a grinding wheel (3);
- a support shaft (5) that can rotate about its axis (X) and can move with respect to the grinding wheel (3), on which support shaft an ophthalmic lens (7) can be mounted via a grinding adapter (15), such that the lens rotates as one with the shaft,
- drive means (9) designed to rotationally drive the support shaft (5) about its axis (X) and to move the support shaft (5) with respect to the grinding wheel (3); and
- control means (11) able to control the drive means (9) according to a preprogrammed control law connecting the relative position (r) of the support shaft (5) and of the grinding wheel (3) to the angular position (θ) of a reference rotating radial axis (Y') in a fixed, frame of reference connected with the axis (X) of the support shaft (5); **characterized in that**

the angular offset (δ) between a rotating radical axis (Y) connected with a lens (7) that is to be ground and the reference rotating radial axis (Y') is estimated using a method as claimed in any one of claims 1 to 5, and in which the control means (11) are programmed in such a way as to introduce a correction into the control laws which correction is dependent on said estimated angular offset (δ).

**7.** The calibration method as claimed in claim 6, **characterized in that** said correction consists in increasing, in the control law, the angular position variable (θ) by the algebraic magnitude (δ) of the estimated angular offset.

**8.** A device for implementing a method as claimed in claim 6 or 7, comprising:

- an image-capturing device (61);
- image analysis means (63) connected to said image-capturing device (61), designed to measure the actual inclination (δI) of the image (33AI) of a reference part (33A) of the contour of an ophthalmic object (31A) with respect to the image (YI) of a line featured son said ophthalmic object (31A);

- programing means (64) connected on the one hand to the image analysis means (63) and, on the other hand, to the control means (11) of an ophthalmic lens grinding machine (1), **characterized in that** said programming means (64) are designed to receive an angular offset information item (δ) from the image analysis means (63) and in response to program the control means (11) of the grinding machine in such a way as to introduce a correction into the control laws as a function of said angular offset information item (δ).

9. The device as claimed in claim 8, **characterized in that** it further comprises a screen (59) and means (55) of illuminating an ophthalmic object allowing the shadow of the object to be projected onto the screen (59), said screen (59) being placed in the field of view of said image-capture device (61).

10. The device as claimed in claim 9, **characterized in that** it comprises a transparent support (53) for accepting the ophthalmic object, arranged between the illumination means (55) and the screen (59).

11. The device as claimed in claim 10, **characterized in that** it comprises a collimator (57) arranged between the illumination means (55) and the transparent support (53) in order to make the light rays emanating from the illumination means (55) more or less mutually parallel and normal to the support (53).

12. The device as claimed in any one of claims 9 to 11, **characterized in that** the screen (59) is a frosted material plate.

13. The device as claimed in any one of claims 8 to 12, **characterized in that** the image-capture device (61) is a video camera.

**Patentansprüche**

1. verfahren zur Berechnung des Winkelversatzes (δ) zwischen einer radialen, mit einem zu schleifenden Glas verbundenen Drehachse (Y) und einer radialen Referenzdrehachse (Y') für eine Schleifmaschine (1) von Brillengläsern, wobei die Schleifmaschine (1) umfasst:

- eine Schleifscheibe (3),
- eine um ihre Achse (X) rotierende und im Verhältnis zur Schleifscheibe (3) bewegbare Stützwelle (5), auf der ein Brillenglas (7) über einen Schleifadapter (15) rotierend verbunden montierbar ist,
- Antriebsmittel (9), die ausgebildet sind, um die Stützwelle (5) um ihre Achse (X) rotierend anzutreiben und um die Stützwelle (5) im Verhältnis zur Schleifscheibe (3) zu verschieben, und
- Steuermittel (11), die imstande sind, die Antriebsmittel (9) gemäß einem vorprogrammierten Regelungsgesetz zu steuern, das die relative Position (r) der Stützwelle (5) und der Schleifscheibe (3) mit der Winkelposition (θ) der radialen Referenzdrehachse (Y') in einer festen, mit der Achse (X) der Stützwelle (5) verbundenen Markierung verbindet,

**dadurch gekennzeichnet, dass** das Verfahren die aufeinanderfolgenden Schritte umfasst, die bestehen im:

- Schleifen eines Schablonenglases (31A), auf dem zuvor die mit dem Glas durch eine Linie verbundene radiale Achse (Y) materialisiert wurde, gemäß einem Regelungsgesetz, das einer Form eines theoretisch fertiggestellten Schablonenglases entspricht, von dem die theoretische Neigung eines Referenzabschnitts (33A) der Kontur im Verhältnis zur radialen Referenzachse (Y') bekannt ist,
- Realisieren eines Bildes (31AI, YI) des fertigen Schablonenglases und der Linie,
- analysieren des Bildes (31AI, YI) durch Mittel zur Bildanalyse, um die tatsächliche Neigung (δI) des Bildes (33AI) des Referenzabschnitts (33A) im Verhältnis zum Bild (YI) der Linie zu messen, und

Ableiten des Winkelversatzes (δ), der gleich dem Abstand zwischen der gemessenen tatsächlichen Neigung (δI) und der theoretischen Neigung ist.

2. Verfahren nach Anspruch 1, **dadurch gekennzeichnet, dass** das Schablonenglas (31A) derart ausgewählt wird, dass seine Kontur mindestens einen geraden Rand (33A) aufweist, wobei dieser den Referenzabschnitt der Kontur darstellt.

3. Verfahren nach Anspruch 2, **dadurch gekennzeichnet, dass** das Schablonenglas (31A) derart ausgewählt wird, dass der gerade Rand (33A) seiner theoretischen fertigen Form parallel zur radialen Referenzachse (Y') ist, das heißt, die theoretische Neigung null ist.

4. Verfahren nach einem der Ansprüche 1 bis 3, **dadurch gekennzeichnet, dass** die Linie von einer Markierung auf dem Glas (7) gebildet wird, die mit der radialen Achse (Y) des Schleifadapters (15) übereinstimmt.

5. Verfahren nach einem der Ansprüche 1 bis 4, **da-**

**durch gekennzeichnet, dass** ein Bild des Schablonenglases (31A) und der Linie (Y) folgendermaßen hergestellt wird:

- Projizieren eines Schattens des Schablonenglases (31A) und der Linie (Y) auf einen Bildschirm (59), und
- Beobachten dieses Schattens mit einer Videokamera (61)

6. Eichverfahren einer Schleifmaschine für Brillengläser der Bauart, die aufweist:

- eine Schleifscheibe (3),
- eine um ihre Achse (X) rotierende und im Verhältnis zur Schleifscheibe (3) bewegbare Stützwelle (5), auf der ein Brillenglas (7) über einen Schleifadapter (15) rotierend verbunden montierbar ist,
- Antriebsmittel (9), die ausgebildet sind, um die Stützwelle (5) um ihre Achse (X) rotierend anzutreiben und um die Stützwelle (5) im Verhältnis zur Schleifscheibe (3) zu verschieben, und
- Steuermittel (11), die imstande sind, die Antriebsmittel (9) gemäß einem vorprogrammierten Regelungsgesetz zu steuern, das die relative Position (r) der Stützwelle (5) und der Schleifscheibe (3) mit der Winkelposition (6) einer radialen Referenzdrehachse (Y') in einer festen, mit der Achse (X) der Stützwelle (5) verbundenen Markierung verbindet,

**dadurch gekennzeichnet, dass**
der Winkelversatz (δ) zwischen einer radialen, mit einem zu schleifenden Glas (7) verbundenen Drehachse (Y) und der radialen Referenzdrehachse (Y') gemäß einem Verfahren, das einem der Ansprüche 1 bis 5 entspricht, berechnet wird, und wobei die Steuermittel (11) derart programmiert werden, dass eine Korrektur der Regelungsgesetze vorgenommen wird, die von dem berechneten Winkelversatz (δ) abhängt.

7. Eichverfahren nach Anspruch 6, **dadurch gekennzeichnet, dass** die Korrektur darin besteht, im Regelungsgesetz die Variable der Wickelposition (θ) des algebraischen Werts (δ) des berechneten Wirkelversatzes zu erhöhen.

8. Vorrichtung zur Umsetzung eines Verfahrens nach Anspruch 6 oder 7, die umfasst:

- eine Vorrichtung zum Aufnehmen von Bildern (61),
- mit der Vorrichtung zum Aufnehmen von Bildern (61) verbundene Bildanalysemittel (63), die geeignet sind, um die tatsächliche Neigung (δl) des Bildes (33Al) eines Referenzabschnitts (33A) der Kontur eines Brillengegenstand (31A) im Verhältnis zum Bild (Yl) einer Linie, die auf dem Brillengegenstand (31A) ist, zu messen.
- Programmiermittel (64), die einerseits mit den Bildanalysemitteln (63) und andererseits mit den Steuermitteln (11) einer Schleifmaschine (1) von Brillengläsern verbunden sind, **dadurch gekennzeichnet, dass** die Programmiermittel (64) geeignet sind, um eine Information des Winkelversatzes (δ) von Seiten der Bildanalysemittef (63) zu erhalten und um als Antwort die Steuermittel (11) der Schleifmaschine derart zu programmieren, dass eine Korrektur der Regelungsgesetze in Abhängigkeit der Information des Winkelversatzes (δ) vorgenommen wird.

9. Vorrichtung nach Anspruch 8, **dadurch gekennzeichnet, dass** sie weiterhin einen Bildschirm (59) und Mittel zum Beleuchten (55) eines Brillengegenstands, die es erlauben, einen Schatten des Gegenstands auf den Bildschirm (59) zu projizieren, umfasst, wobei der Bildschirm (59) im Beobachtungsfeld der Vorrichtung zum Aufnehmen von Bildern (61) angeordnet ist.

10. Vorrichtung nach Anspruch 9, **dadurch gekennzeichnet, dass** sie einen durchsichtigen Halter (53) umfasst, um einen Brillengegenstand aufzunehmen, der zwischen den Mitteln zum Beleuchten (55) und dem Bildschirm (59) angeordnet ist.

11. Vorrichtung nach Anspruch 10, **dadurch gekennzeichnet, dass** sie einen Kollimator (57) umfasst, der zwischen den Mitteln zum Beleuchten (55) und dem durchsichtigen Halter (53) angeordnet ist, um die Lichtstrahlen, die von den Mitteln zum Beleuchten (55) ausgesendet werden, etwa parallel zueinander und senkrecht im Verhältnis zum Halter (53) auszurichten.

12. Vorrichtung nach einem der Ansprüche 9 bis 11, **dadurch gekennzeichnet, dass** der Bildschirm (59) eine Mattscheibe ist.

13. Vorrichtung nach einem der Ansprüche 8 bis 12, **dadurch gekennzeichnet, dass** die Vorrichtung zum Aufnehmen von Bildern (61) eine Videokamera ist.

EP 1 603 708 B1

FIG.1

FIG.2

33    31

15    31T

Y
Y'

**FIG.3**

31A    33A    33B    31B

Y    Y

15    15

**FIG.4**

33A,33B

Y

Δ

**FIG.5**

31A,31B    15    Y

## FIG.6

31AI

33I

15I

δI

YI

**FIG.7**

**EP 1 603 708 B1**

## RÉFÉRENCES CITÉES DANS LA DESCRIPTION

**Documents brevets cités dans la description**

- FR 2771665 A